# DEMANDE DE BREVET EUROPEEN

(11) **EP 0 612 955 A1**
(43) Date de publication de la demande: **31.08.1994**
(21) Numéro de dépôt: 94470003.8
(22) Date de dépôt: 22.02.1994
(51) Int. Cl.: F21P 1/02, F21S 9/02, F21V 33/00

(54) **Appareil d'éclairage à habillage recyclable**

(30) Priorité: 23.02.1993 FR 9302301
(71) Demandeur: ADDA DESIGN, F-54000 Nancy (FR)
(72) Inventeur: Antoine, Jean-Luc, F-54000 Nancy (FR)
(74) Mandataire: Poupon, Michel

(57) **Abrégé**

L'invention se rapporte à un appareil d'éclairage (1) du type comportant une partie fonctionnelle et des éléments décoratifs caractérisé en ce que la partie fonctionnelle (2) est séparable des éléments décoratifs qui se présentent sous la forme d'au moins une formette (3) en matériau recyclable.

Plus particulièrement la partie technique peut être un boîtier à ampoule fonctionnant avec un accumulateur et un capteur solaire.

L'invention porte également sur les gammes de produits obtenues par recyclage et modification des formettes et sur un procédé de fabrication des formettes.

## Description

La présente invention concerne un appareil d'éclairage plus particulièrement du type lampe à poser ou à accrocher comportant une partie fonctionnelle et des éléments décoratifs. L'invention concerne également la gamme d'appareils obtenue par modification des éléments décoratifs et le procédé de fabrication des éléments décoratifs.

D'une façon générale, les produits mis sur le marché bénéficient de toutes les innovations technologiques contribuant à l'amélioration de notre qualité de vie. Cependant leur élimination pose d'énormes problèmes à la collectivité.

Jusqu'à maintenant, lorsqu'un appareil d'éclairage du type précité ne donne plus satisfaction parce que ces éléments décoratifs sont défraichis ou passés de mode, on se débarrasse de l'ensemble, c'est-à-dire de la partie fonctionnelle et des éléments décoratifs.

Le problème posé consiste à concevoir un appareil dont les éléments sont totalement réutilisables pour reformer un appareil rénové, d'où économie de matériaux et diminution de la masse des déchets à traiter par la collectivité.

Pour résoudre ce problème tout en restant dans la logique economique actuelle, l'invention propose à la fois :
- de dissocier les éléments fonctionnels du produit, qui ont une durée de vie souvent plus longue, des éléments esthétiques ou décoratifs,
- de réaliser les éléments esthétiques ou décoratifs en matériaux recyclables.

En reformant l'appareil à partir de l'élément fonctionnel initial et d'éléments décoratifs recyclés et nouveaux, on obtient une combinaison de moyens formant un nouvel appareil rénové.

Le problème est résolu conformément à l'invention par un appareil d'éclairage du type comportant une partie fonctionnelle et des éléments décoratifs caractérisé en ce que la partie fonctionnelle est séparable des éléments décoratifs qui se présentent sous la forme d'au moins une formette en matériau recyclable.

En outre, la partie fonctionnelle peut avantageusement être un boîtier électrique à section verticale triangulaire, avec une base, une face avant portant la partie éclairage, une face arrière et deux flans latéraux, boîtier comportant un circuit électrique à accumulateur chargeable par au moins un capteur solaire placé sur une partie au moins de la base, avec un interrupteur à bascule en série dans le circuit de l'ampoule.

Enfin, l'habillage recyclable est fabriqué par un procédé comportant une étape de mise en suspension de fibres, suivie au moins des étapes de fabrication, moulage et séchage, et éventuellement coloration de formettes.

On comprendra mieux l'invention à l'aide de la description qui suit faite en référence aux figures annexées suivantes :
- **Figures 1,2,3** :vue générale d'une première variante de réalisation avec trois habillages différents,
- **Figure 4** : vue en coupe verticale de la partie technique de la variante des figures 1 à 3,
- **Figures** **5 et 6** : vues de face et latérale de la partie technique de la figure 4,
- **Figure 7** : vue générale d'une autre variante de réalisation.

L'invention est décrite à partir de deux exemples de réalisations non limitatifs et déclinables pour former deux gammes de produits.

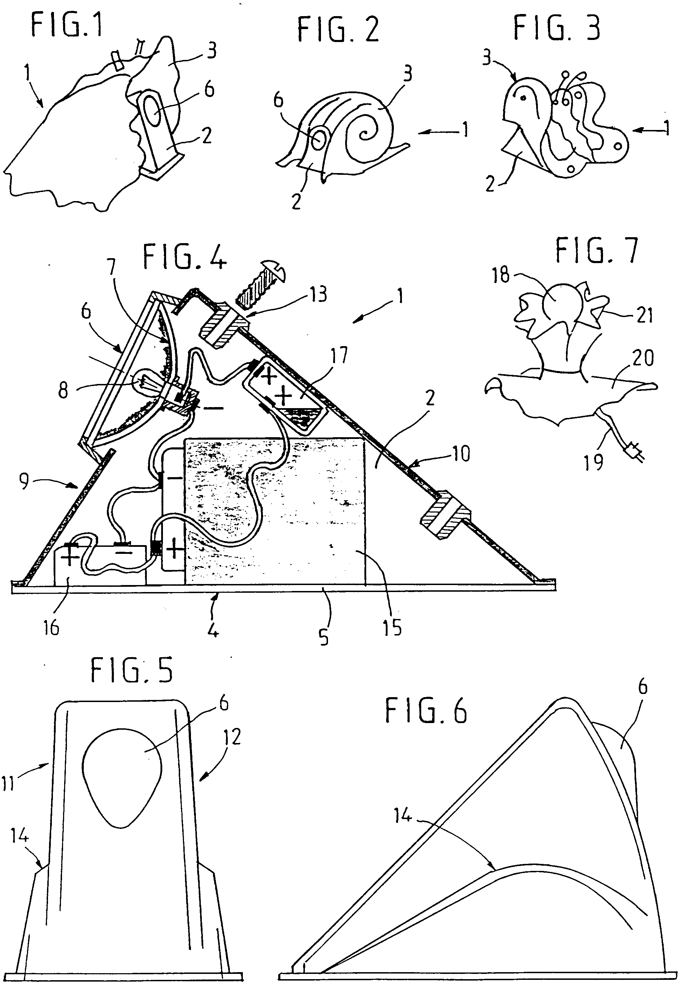

On se reportera d'abord aux figures 1 à 3 pour le premier mode de réalisation.

Il s'agit d'une lampe de chevet (1) fonctionnant à l'énergie solaire avec une partie fonctionnelle constituée d'un boîtier (2) enfermant les composants électriques et énergétiques et d'éléments décoratifs formant habillage (3), réalisés en matériaux entièrement recyclables.

La présentation initiale de l'appareil est par exemple celle de la figure 1 avec un habillage (3) en forme de lutin, que l'on peut réexpédier au fabricant qui le recycle et le renvoie au client sous la nouvelle forme choisie, par exemple un escargot (figure 2) ou un papillon (figure 3). Il suffit de fixer ou cliper ou emboîter la nouvelle forme d'habillage sur le boîtier pour obtenir une lampe rénovée.

Ainsi cette combinaison de moyens permet de créer un nouvel objet sans modification de la partie technique et sans gaspillage des éléments décoratifs.

Pour l'habillage recyclable on utilise de préférence un matériau du type papier, réalisé et conformé selon le procédé suivant :
- Mise en suspension de fibres, de préférence fibres de coton, puis filtration. Pour les fibres recyclées on réalise un broyage préalable des habillages récupérés.
- Fabrication de formettes de papier d'épaisseur prédéterminée, par exemple 4 mm à partir des fibres filtrées, qu'elles soient vierges ou recyclées.
- Coloration des formettes au pistolet ou par tout moyen de projection ou de dépôt avec des produits colorants dont les pigments sont de préférence entièrement naturels pour éviter les problèmes de pollution éventuelle de l'eau de filtration lors du recyclage suivant.
- Moulage des formettes sur moules ouverts multiempreintes, avec éventuellement conformation ou mise en place des plis manuellement.
- Séchage des formes restées sur moules en étuves ou en séchoir.
- Démoulage et stockage.

Selon l'aspect décoratif recherché, l'habillage décoratif peut nécessiter une ou plusieurs formettes que l'on peut superposer.

D'autre part l'étape de coloration n'est pas impérative et peut avoir lieu après moulage, ou séchage, ou démoulage.

On se reporte à présent aux figures 4 à 6 pour la description de la partie technique.

Le boîtier (2) présente une section verticale triangulaire avec :
- une base (4) sur laquelle repose la lampe en état d'éclairage et qui comporte sur tout ou partie de sa surface un ou des capteurs solaires (5),
- une face avant (9) inclinée portant la partie éclairage à savoir verre de protection (6), réflecteur (7), ampoule (8) et son support. Ladite face avant sert également de base d'appui quand la lampe est en état de rechargement.

A cet effet, l'angle d'inclinaison de la face avant (9) par rapport à la base (4) est calculé pour donner le meilleur rendement au capteur solaire (5), de préférence cet angle est de 60 degrés environ.
- une face arrière (10) et des flans latéraux (11,12) pouvant servir à la fixation et/ou au positionnement de l'habillage par exemple par deux inserts de fixation (13) et/ou par deux épaulements latéraux (14).

Le boîtier est de préférence étanche et il renferme un circuit électrique composé d'un accumulateur (15) relié d'une part à un connecteur (16) du capteur solaire et d'autre part à un interrupteur, par exemple un interrupteur à bascule (17) et une ampoule (8) branchés en série.

L'accumulateur se recharge en quelques heures, boîtier posé sur la face avant (9) et base dirigée vers le soleil, l'allumage se fait par simple basculement sur la base et l'éclairage peut durer plusieurs heures.

En option on peut prévoir un moyen de connection électrique au secteur.

On se reporte à présent à la figure 7 qui montre une autre variante de réalisation.

La partie technique, non visible, est un socle classique à douille portant une ampoule (18) classique, et reliée au secteur par un câble électrique (19).

L'habillage est composé de deux formettes (20,21) dont une (20) sensiblement carrée et étendue sur un plan, l'autre (21) entourant l'ampoule à la façon d'une corolle de fleur.

Les formettes sont recyclables et réalisées selon les étapes de fabrication décrites pour le premier mode de réalisation.

La formette (21) est conformée puis séchée par retournement autour d'un moule cylindrique vertical.

La formette (20) comporte sensiblement en son centre un logement aux dimensions du socle de l'ampoule et obtenu par moulage dans des coupelles circulaires.

Comme pour le premier mode de réalisation les formettes peuvent être réexpédiées au fabricant qui les recycle et les renvoie au client qui les remonte ensuite sur sa lampe.

Le deuxième mode de réalisation de la lampe présente l'avantage de pouvoir être posé, accroché sur une paroi verticale, ou suspendu.

## Revendications

1. Appareil d'éclairage du type comportant une partie fonctionnelle et des éléments décoratifs caractérisé en ce que la partie fonctionnelle se présente sous la forme d'un ensemble (2) séparable des éléments décoratifs (3,20,21) et en ce que lesdits éléments décoratifs se présentent sous la forme d'au moins une formette en matériau recyclable.

2. Appareil d'éclairage selon la revendication 1 caractérisé en ce que l'ensemble séparable (2) est un boîtier électrique à section verticale triangulaire, avec une base (4), une face avant (9) portant la partie éclairage (6,7,8), une face arrière (10) et deux flans latéraux (11,12), ledit boîtier comportant un circuit électrique à accumulateur chargeable par au moins un capteur solaire (5) placé sur une partie au moins de la base (4), avec un interrupteur (17) en série dans le circuit de l'ampoule.

3. Appareil d'éclairage selon la revendication précédente caractérisé en ce que l'angle d'inclinaison de la face avant (9) est de 60°.

4. Gamme d'appareils d'éclairage caractérisée en ce que tous les appareils de la gamme sont formés de la même partie technique selon l'une des revendications 2 à 3 et d'habillages décoratifs différents composés d'au moins une formette (3,20,21) en matériau recyclable.

5. Procédé de fabrication de l'habillage recyclable pour les appareils ou gamme selon les revendications 1 à 4 caractérisé en ce qu'il se compose des étapes suivantes :
- Mise en suspension de fibres, de préférence fibres de coton, puis filtration. Pour les fibres recyclées on réalise un broyage préalable des habillages récupérés.
- Fabrication de formettes de papier d'épaisseur prédéterminée, par exemple 4 mm à partir des fibres filtrées, qu'elles soient vierges ou recyclées.
- Moulage des formettes sur moules ouverts multiempreintes, avec éventuellement conformation ou mise en place de plis manuellement.
- Démoulage et stockage.

6. Procédé de fabrication de l'habillage selon la revendication précédente caractérisé en ce qu'il comporte une étape de coloration utilisant des pigments naturels.

7. Procédé de fabrication selon l'une des revendications 5 à 6 caractérisé en ce qu'il comporte une étape de conformation autour de moules cylindriques verticaux.
